# EUROPÄISCHE PATENTSCHRIFT

(11) **EP 1 079 082 B1**
(45) Veröffentlichungstag und Bekanntmachung des Hinweises auf die Patenterteilung: **02.04.2003**
(21) Anmeldenummer: 00115282.6
(22) Anmeldetag: 14.07.2000
(51) Int. Cl.: F02B 37/22, F02B 39/16, F02B 37/24, F02D 33/02

(54) **Verfahren zum Betrieb einer aufgeladenen Brennkraftmaschine**
Method of operating a turbocharged engine
Procédé de commande d'un moteur suralimenté

(30) Priorität: 25.08.1999 DE 19940287; 17.11.1999 DE 19955256
(43) Veröffentlichungstag der Anmeldung: 28.02.2001
(73) Patentinhaber: DaimlerChrysler AG, 70567 Stuttgart (DE)
(72) Erfinder: Digeser, Steffen, 70734 Fellbach (DE); Hertweck, Gernot, 70736 Fellbach (DE); Knieps, Thomas, 71573 Allmersbach i. T. (DE); Kromer, Frank, 73779 Deizisau (DE); Schmid, Lothar, 70374 Stuttgart (DE)

(56) Entgegenhaltungen:
- GB-A- 2 083 135
- US-A- 4 292 807
- US-A- 4 833 886
- PATENT ABSTRACTS OF JAPAN vol. 011, no. 188 (M-599), 17. Juni 1987 (1987-06-17) & JP 62 013731 A (TOYOTA MOTOR CORP), 22. Januar 1987 (1987-01-22)
- PATENT ABSTRACTS OF JAPAN vol. 010, no. 238 (M-508), 16. August 1986 (1986-08-16) & JP 61 070135 A (NISSAN MOTOR CO LTD), 10. April 1986 (1986-04-10)

## Beschreibung

Die Erfindung betrifft ein Verfahren zum Betrieb einer aufgeladenen Brennkraftmaschine nach dem Oberbegriff des Anspruchs 1.

Abgasturbolader werden sowohl für selbstzündende Hubkolbenbrennkraftmaschinen mit Qualitätsregelung als auch fremdgezündete Hubkolbenbrennkraftmaschinen mit Qualitätsregelung oder Quantitätsregelung eingesetzt, um die Leistung zu steigern oder die Abgasqualität zu verbessern, indem durch komprimierte Luft die Zylinderladung verbessert und die Expansionsenergie der Verbrennungsgase vermehrt genutzt wird.

Abgasturbolader sind bewährte Hilfsaggregate mit einem einfachen Aufbau und einer langen Lebensdauer. Sie bestehen in der Regel aus einer Abgasturbine mit einer konstanten Schaufelgeometrie, die einen Radialverdichter antreibt. Während die Abgasturbine als Strömungsmaschine gut mit dem Radialverdichter zusammenarbeitet, zeigen beide Aggregate als Abgasturbolader ein anderes Betriebsverhalten als die Hubkolbenbrennkraftmaschine, das nur schwer an die Bedürfnisse der Hubkolbenbrennkraftmaschine anzupassen ist. Legt man den Abgasturbolader für den Vollastbereich der Hubkolbenbrennkraftmaschine aus, ist der Förderdruck im Vollast-Niederdrehzahlbereich aufgrund des verringerten Abgasvolumenstroms und der reduzierten Gasgeschwindigkeit durch die Abgasturbine unzureichend. Legt man dagegen den Abgasturbolader für den Vollast-Niedrigdrehzahlbereich der Hubkolbenbrennkraftmaschine aus, ist das Fördervolumen im Vollastbereich zu hoch, so daß die zu hohe Abgasmenge über ein Bypassventil'abgeführt werden muß, um den gewünschten Ladedruck zu erhalten. Dies hat erhebliche Wirkungsgradverluste zur Folge.

Es ist bekannt, den Radialverdichter im Vollast-Niedrigdrehzahlbereich der Hubkolbenbrennkraftmaschine zusätzlich zur Abgasturbine mechanisch durch einen Elektromotor oder eine Gasturbine anzutreiben oder die Abgasturbine zusätzlich mit den Brenngasen einer Brennkammer zu beaufschlagen. Diese Lösungen erfordern einen großen Bauaufwand und Regelungsbedarf.

Zur "Entschärfung" des oben dargestellten Zielkonflikts werden Abgasturbolader mit einer variablen Schaufelgeometrie eingesetzt. Die EP 0 598 174 A1 beschreibt einen Abgasturbolader für eine Brennkraftmaschine, dessen Abgasturbine ein Laufrad hat, das von einem mindestens teilweise diagonal durchströmten Leitapparat mit einem spiralförmigen Leitkanal umgeben ist. Dieser besitzt einen ringdüsenförmigen Mündungsbereich, in dem ein variables Leitgitter mit Leitschaufeln angeordnet ist. Bei Vollast der Brennkraftmaschine sind die Strömungsquerschnitte des Leitgitters vollständig geöffnet, während für einen Teillastbetrieb oder Vollast-Niedrigdrehzahl der Brennkraftmaschine die Strömungskanäle des Leitgitters durch Verdrehen eines Teils des Leitgitters teilweise abgeriegelt sind. Durch diese Maßnahmen kann im Teillastbereich oder Vollast-Niedrigdrehzahl der Brennkraftmaschine die Drehzahl der Abgasturbine trotz des verringerten Volumenstroms auf einem hohen Niveau gehalten werden und somit das verfügbare Kennfeld auf der Seite der Abgasturbine des Abgasturboladers verbreitert werden. Allerdings. bleibt das Kennfeld des Radialverdichters prinzipiell unverändert.

Um den Vorteil auf der Abgasturbinenseite möglichst gut nutzen zu können, ist es erforderlich, bis an die Grenzen des Kennfelds des Radialverdichters zu gehen, die durch die Maximaldrehzahl, die Stopf- und die Pumpgrenze bestimmt sind. Unter "Pumpen" bei Radialverdichtern versteht man ein Rückströmen des komprimierten gasförmigen Mediums aufgrund einer Strömungsablösung im Verdichterrad aus einem Speichervolumen auf der Druckseite des Radialverdichters, wenn der Volumenstrom durch den Radialverdichter soweit abfällt, daß der Radialverdichter den erforderlichen Förderdruck gegen den Speicherdruck nicht mehr erzeugen kann. Ist der Druck auf der Druckseite des Radialverdichters durch die Rückströmung soweit abgefallen, daß der Radialverdichter wieder einen entsprechenden Förderdruck liefert, setzt die Förderung in Förderrichtung wieder ein, bis sich der Speicher wieder aufgeladen hat und sich der Pumpvorgang wiederholt. Das "Pumpen" führt zu hohen mechanischen Belastungen des Abgasturboladers und ist mit einem für den Fahrer störenden Geräusch verbunden.

Stärker noch als von den maximal erreichbaren Werten für Drehmoment und Leistung wird der Fahrleistungseindruck eines Kraftfahrzeugs von der Spontanität der Reaktion auf Gaspedalbewegungen und - vor allem bei aufgeladenen Brennkraftmaschinen - vom Drehmomentaufbau bei Beschleunigung aus niedrigen Drehzahlen geprägt. Da die Geschwindigkeit des Drehmomentaufbaus davon abhängt, wie schnell der Ladedruck aufgebaut wird, können hierfür Abgasturbolader mit einer variablen Schaufelgeometrie auf der Abgasturbinenseite vorteilhaft eingesetzt werden, indem die Leitschaufeln am Beginn eines Beschleunigungsvorgangs aus dem Teillastbereich weitgehend geschlossen werden, so daß die Abgasturbine sehr stark beschleunigt.

Obwohl ein ausreichender Abstand zur Pumpgrenze des Radialverdichters im stationären Betrieb eingehalten wird, können instationär kurzzeitig Pumpvorgänge auftreten. Diese Gefahr besteht insbesondere, wenn der Fahrer des Kraftfahrzeugs aus einem Fahrzustand mit einem hohen Verdichterdruckverhältnis und mittleren bis niedrigen Motordrehzahlen schnell das Gaspedal zurücknimmt und die Drehzahl der Brennkraftmaschine, z.B. bei Fahrzeugen mit hydrodynamischen Kupplungen, bzw. Wandlern oder bei Schaltungen mit Zugkraftunterbrechung, schnell sinkt.

Aus der JP 62013731 ist ein Abgasturbolader mit einer Abgasturbine bekannt, deren Leitapparat verstellbar ist. Um eine hoch präzise Steuerung durchzuführen, die nicht von Umgebungseinflüssen, z.B. in der Höhe, vom Unterschied der Umgebungstemperatur abhängt, wird ein Laddruck oder ein Druck am Ausgang eines Verdichters direkt gesteuert, ausgenommen während der Zeit einer plötzlichen Verzögerung. Im niedrigen Drehzahlbereich der Brennkraftmaschine wird der engste Querschnitt des Leitapparats auf einen minimalen Wert gesetzt. In einem mittleren Drehzahlbereich wird die Weite des Querschnitts auf einen hohen Wert gesetzt, um zu verhindern, dass der Verdichter im so genannten Pumpbereich arbeitet. Abweichend von dieser Regelung wird während einer plötzlichen Verzögerungszeit der Leitapparat in Abhängigkeit der Drehzahl der Brennkraftmaschine gesteuert.

Aus der GB 2 083 135 A ist eine Brennkraftmaschine mit einem Abgasturbolader bekannt, dessen Abgasturbine keinen verstellbaren Leitapparat aufweist, sondern deren Leistung durch einen Bypass mit einem Bypassventil gesteuert wird. Um zu verhindern, dass der Verdichter bei einem Abfall der Drehzahl der Brennkraftmaschine, insbesondere nach einer vorangehenden Beschleunigung, in einem Pumpbereich arbeitet, wird das Bypassventil der Abgasturbine völlig geöffnet, um den Verdichter so schnell wie möglich zu verzögern.

Aus der US 4 833 886 ist eine Brennkraftmaschinen mit einem Abgasturbolader bekannt, dessen Abgasturbine einen verstellbaren Leitapparat aufweist, und der außerdem eine Bypassleitung besitzt, durch die ein Teil der zu viel geförderten Verbrennungsluft in die Abgasleitung der Brennkraftmaschine geleitet werden kann. Entsprechend den jeweiligen Betriebsverhältnissen wird die Steuerung des Leitapparats auf die Steuerung des Bypassventils abgestimmt.

Der Erfindung liegt die Aufgabe zugrunde, ein Pumpen des Radialverdichters auch bei einem instationären Betrieb der Brennkraftmaschine zu vermeiden, ohne im stationären Betrieb einen größeren Abstand von der Pumpgrenze in Kauf nehmen zu müssen. Diese Aufgabe wird gemäß der Erfindung durch die Merkmale des Anspruchs 1 gelöst. Weitere Ausgestaltungen ergeben sich aus den Unteransprüchen.

Wenn der Fahrer eines Fahrzeugs sehr schnell das Gaspedal zurücknimmt, besteht die Möglichkeit, daß die Drehzahl der Brennkraftmaschine stark abfällt. Während mit der Drehzahl der Brennkraftmaschine das Schluckvermögen der Brennkraftmaschine schnell sinkt, dreht sich der Abgasturbolader aufgrund der Massenträgheit seiner rotierenden Teile noch mit hoher Drehzahl. Kurzzeitig steigt dadurch der Druck in der Ladeluftleitung und damit das Verdichterdruckverhältnis über den Sollwert, so daß die Pumpgrenze überschritten wird. Solche Verhältnisse treten insbesondere bei Fahrzeugen mit Automatgetrieben und einem hydrodynamischen Wandler auf oder, wenn die Gasrücknahme mit einer Schaltung mit Zugkraftunterbrechung verbunden ist. Dies um so mehr, wenn kurz zuvor während einer Beschleunigungsphase die Strömungsquerschnitte des Leitapparats der Abgasturbine zur Beschleunigung der Abgasturbine verkleinert wurden.

Nach der Erfindung wird die Leistung der Abgasturbine zusätzlich zum abnehmenden Abgasvolumenstrom bei Rücknahme des Gaspedals kurzfristig verringert, wenn die Geschwindigkeit der Rücknahme eines Gaspedals einen kritischen Wert überschreitet, indem die Strömungsquerschnitte des Leitapparats kurzfristig verstärkt geöffnet werden.

Durch das erfindungsgemäße Verfahren wird dafür gesorgt, daß die Drehzahl der Abgasturbine reduziert wird, indem die Strömungsquerschnitte des Leitapparats kurzfristig vergrößert werden. Außerdem wird gemäß einer Ausgestaltung der Erfindung das Schluckvolumen der Brennkraftmaschine kurz vor Erreichen des kritischen Druckverhältnisses nur langsam reduziert, indem die Einspritzmenge des Kraftstoffs als Reaktion auf die Gaspedalbewegung verzögert verringert wird, wenn eine Geschwindigkeit einer Rücknahme eines Gaspedals einen kritischen Wert überschreitet. Dadurch wird der Abfall der Drehzahl und des Schluckvolumens der Brennkraftmaschine kurzfristig verzögert. Nach kurzer Zeit werden die Strömungsquerschnitte des Leitapparats der Abgasturbine wieder auf den Sollwert geschlossen, um ein gutes Anbinden an einen anschließenden Beschleunigungsvorgang, z.B. nach einem Schaltvorgang, zu gewährleisten. Dadurch wird das Fördervolumen des Abgasturboladers und/oder das Schluckvolumen der Brennkraftmaschine schnell und wirkungsvoll aufeinander abgestimmt.

Wird bei einer überkritischen Rücknahme des Gaspedals die eingespritzte Kraftstoffmenge verzögert verringert, kann der Eindruck entstehen, daß das Fahrzeug bei Rücknahme des Gaspedals nachschiebt. Es ist daher vorteilhaft, die Einspritzmenge als Reaktion auf die Gaspedalbewegung zunächst um einen Teilbetrag sehr schnell zu reduzieren, damit der Fahrer eine eindeutige Verzögerungsreaktion spürt, und anschließend verlangsamt abzusenken.
Da sich bei einem Fahrzeug ohne hydrodynamische Antriebseinheit die Drehzahl der Brennkraftmaschine bei einer Gasrücknahme nur ändern kann, wenn die Zugkraft unterbrochen ist oder das Fahrzeug stark verzögert, ist es zweckmäßig, die vorgesehen Maßnahmen von diesen Parametern abhängig zu machen, um unnötige Regelvorgänge zu vermeiden.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

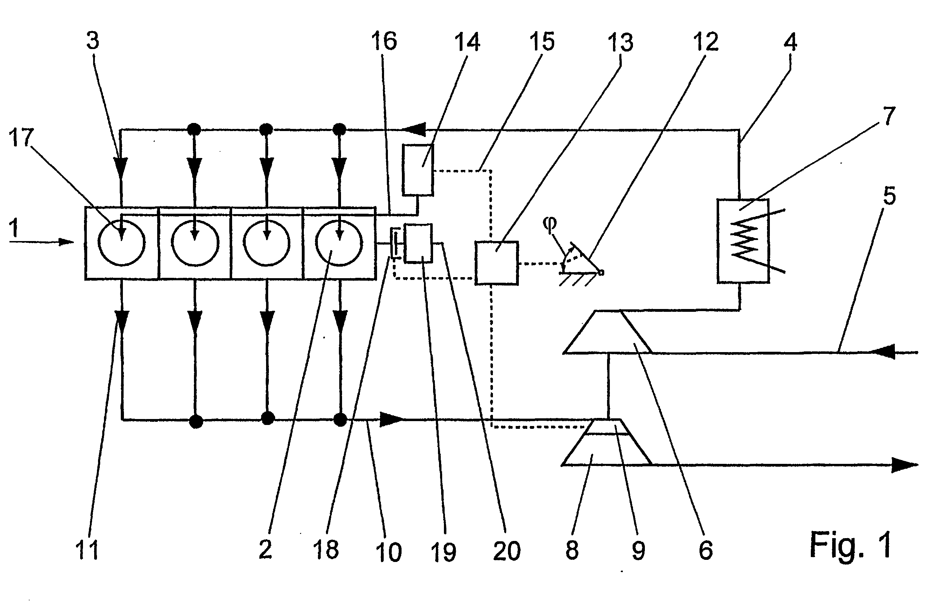

- Fig. 1: eine schematisch dargestellte Hubkolbenbrennkraftmaschine mit einem Abgasturbolader und
- Fig. 2: ein Diagramm, in dem Veränderungen einiger Parameter über der Zeit dargestellt sind.

Ein Radialverdichter 6, der von einer Abgasturbine 8 angetrieben wird, saugt über eine Ansaugleitung 5 Luft aus der Umgebung an und fördert die verdichtete Luft über eine Ladeluftleitung 4 und einen Ladeluftkühler 7 sowie Ansaugstutzen 3 zu einer Hubkolbenbrennkraftmaschine 1. Diese besitzt mehrere Zylinder 2, in die Kraftstoff mittels einer Kraftstoffeinspritzvorrichtung 14 über eine Druckleitung 16 und Einspritzventile 17 eingespritzt wird. Die während der Verbrennung der Zylinderladung entstehenden Abgase gelangen über Abgaskrümmer 11 und eine Abgasleitung 10 zur Abgasturbine 8. Diese besitzt einen Leitapparat 9 mit einer variablen Schaufelgeometrie, dessen Strömungsquerschnitte mittels eines nicht dargestellten VNT-Stellers (Variable Nozzle Turbine) verändert werden können.

Die Hubkolbenbrennkraftmaschine 1 treibt über eine Kupplung 18 ein Getriebe 19 an, das mit Zugkraftunterbrechung schaltbar ist und über eine Abtriebswelle 20 ein nicht näher dargestelltes Fahrzeug antreibt. Zur Steuerung und Regelung der Hubkolbenbrennkraftmaschine 1 ist eine elektronische Steuereinheit 13 vorgesehen, die über Signalleitungen 15 mit der Kraftstoffeinspritzvorrichtung 14, der Kupplung 18, dem Leitapparat 9, der Abgasturbine 8 und einem Gaspedal 12 verbunden ist. Das Gaspedal 12 wird von einem Fahrer betätigt. Sein Positionswinkel ϕ entspricht in erster Näherung der Einspritzmenge des Kraftstoffs, die durch die Steuereinheit 13 bestimmt wird.

Beim Schalten des Getriebes 19 wird die Zugkraft unterbrochen, indem die Kupplung 18 vom Fahrer oder automatisch geöffnet wird. Gleichzeitig wird das Gaspedal 12 zurückgenommen, so daß die Drehzahl der Brennkraftmaschine 1 stark abfällt. Entsprechend der Drehzahl verringert sich das Schluckvermögen der Hubkolbenbrennkraftmaschine 1, d.h. die Luftmenge, die von der Ladeluftleitung 4 durch die Hubkolbenbrennkraftmaschine 1 in die Abgasleitung 10 gelangt. Dadurch reduziert sich ebenfalls die Abgasmenge auf der Auslaßseite der Hubkolbenbrennkraftmaschine 1 und die Antriebsleistung der Abgasturbine 8. Allerdings durch die Massenträgheit der rotierenden Teile des Abgasturboladers, bestehend aus der Abgasturbine 8 und dem Radialverdichter 6, dreht sich dieser noch eine Weile mit hoher Drehzahl. Da aus der Ladeluftleitung 4 relativ wenig Luft entnommen wird, steigt der Druck in der Ladeluftleitung 4 und damit das Verdichterdruckverhältnis stark an, d.h. das Verhältnis des Drucks in der Ladeluftleitung 4 zum Druck in der Ansaugleitung 5, so daß die Pumpgrenze überschritten wird. Dies könnte dadurch vermieden werden, daß ein größerer Auslegungsabstand zur stationären Pumpgrenze gewählt würde, was allerdings zu einer Einbuße an maximalem Ladedruck und damit an Drehmoment bei kleinen Drehzahlen der Hubkolbenbrennkraftmaschine 1 führt.

Nach der Erfindung wird das Überschreiten der Pumpgrenze dadurch vermieden, daß bei einer schnellen Rücknahme des Gaspedals 12 durch die Steuereinheit 13 die Einspritzmenge des Kraftstoffs und damit der Drehzahlabfall der Brennkraftmaschine kurzfristig verzögert wird. Dadurch erhöht sich das Schluckvolumen der Brennkraftmaschine 1 und damit der Volumenstrom durch den Radialverdichter 6, so daß das Pumpen vermieden wird.

Um den Eindruck zu vermeiden, daß das Fahrzeug noch nachschiebt, wenn der Fahrer das Gaspedal 12 schnell zurücknimmt, kann zunächst ein Teilbetrag der Einspritzmenge schnell reduziert werden, damit der Fahrer eine eindeutige Verzögerungsreaktion spürt und anschließend verlangsamt abgesenkt werden. Ferner besteht nach der Erfindung die Möglichkeit, die Leistung der Abgasturbine 8 kurzzeitig zu reduzieren, indem die Strömungsquerschnitte des Leitapparats 9 vermehrt geöffnet werden, damit die Abgasturbine 8 schneller in ihrer Drehzahl sinkt und der Radialverdichter 6 einen geringeren Volumenstrom fördert. Nach kurzer Zeit werden dann die strömungsquerschnittte des Leitapparats wieder auf den Sollwert geschlossen, um ein gutes Anbinden bei einem anschließenden Beschleunigungsvorgang zu gewährleisten. Es können auch beide Maßnahmen kombiniert angewendet werden, so daß sowohl die Leistung der Abgasturbine 8 kurzfristig verringert als auch der Abfall der Drehzahl der Hubkolbenbrennkraftmaschine 1 kurzfristig verzögert wird, wenn die Geschwindigkeit einer Rücknahme des Gaspedals 12 einen kritischen Wert übersteigt.

Da sich die Drehzahl der Brennkraftmaschine 1 bei einem Fahrzeug nur verringern kann, wenn die Zugkraft unterbrochen ist, das Fahrzeug stark abgebremst wird oder ein hydrodynamisches Antriebselement, eine hydrodynamische Kupplung oder ein Wandler eine Drehzahlabsenkung zulassen, ist es zweckmäßig, diese Parameter im erfindungsgemäßen Verfahren im Zusammenhang mit der Gasrücknahme zu berücksichtigen.

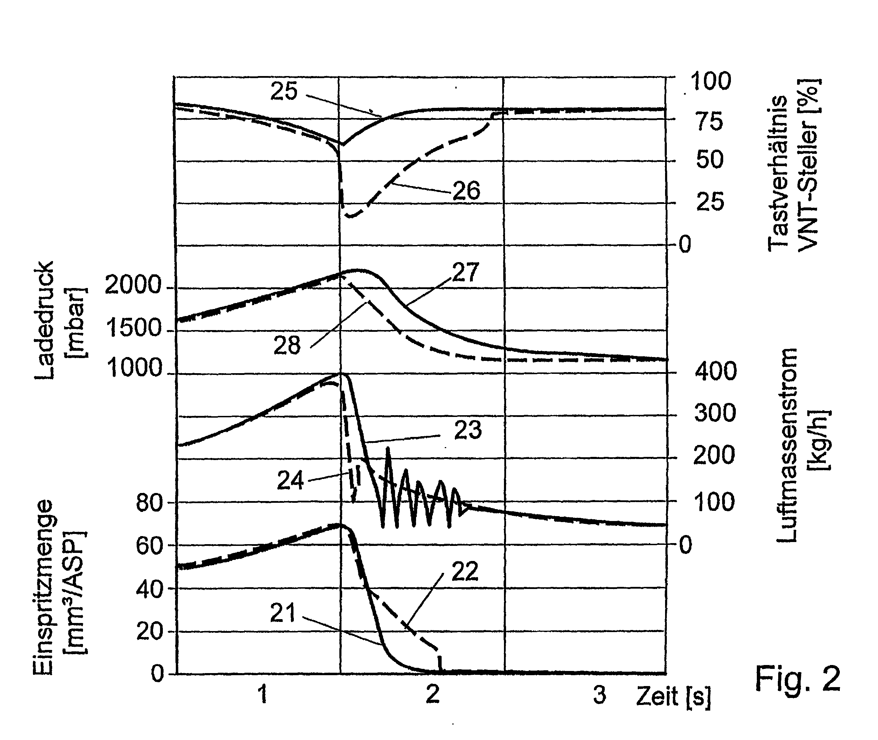

Fig. 2 zeigt den zeitlichen Verlauf einiger Parameter. Auf der Abszisse ist die Zeit in Sekunden s aufgetragen, während als Koordinate entsprechend den Parametern geeignete Einheiten aufgetragen sind. Die durchgezogenen Linien stellen den üblichen Verlauf dar, während die gestrichelten Linien eine optimierte Auslegung darstellen. So zeigt eine Kurve 21 die normale Reduzierung der Einspritzmenge bei einer schnellen Rücknahme des Gaspedals 12, während die Kurve 22 deutlich macht, daß die Einspritzmenge zunächst über einen Teilbereich schnell abfällt und anschließend verlangsamt abgesenkt wird. Die dazugehörigen Kurven 23 und 24, die den Luftmassenstrom durch den Radialverdichter 6 zeigen, machen deutlich, daß im Normalfall bei einer schnellen Reduzierung der Einspritzmenge der Luftmassenstrom stark abfällt und dann schwankt, d.h. der Radialverdichter "pumpt", während die Kurve 24 auf ein stabiles Verhalten schließen läßt. Die Kurve 25 und 26 zeigen das Tastverhältnis des VNT-Stellers des Leitapparats 9. Die Kurve 26 zeigt, daß der Leitapparat 9 bei einer kritischen Rücknahme des Gaspedals 12 gegenüber der Kurve 25 deutlich mehr geöffnet wird, mit der Folge, daß der Druck in der Ladeluftleitung 4 nach der Kurve 28 deutlich unter dem Druck nach der Kurve 27 liegt und damit ebenfalls das Pumpen des Radialverdichters 6 vermieden wird.

## Patentansprüche

1. Verfahren zum Betrieb einer aufgeladenen Brennkraftmaschine für ein Kraftfahrzeug mit einem Radialverdichter, der von einer Abgasturbine mit einem verstellbaren Leitapparat angetrieben wird, dessen Strömungsquerschnitte mit abnehmendem Abgasvolumenstrom verkleinert werden, **dadurch gekennzeichnet, dass** die Strömungsquerschnitte des Leitapparats (9) kurzfristig verstärkt geöffnet werden, wenn eine Geschwindigkeit einer Rücknahme eines Gaspedals (12) einen kritischen Wert überschreitet.

2. Verfahren nach Anspruch 1, **dadurch gekennzeichnet, dass** die Einspritzmenge des Kraftstoffs als Reaktion auf die Gaspedalbewegung (12) verzögert verringert wird, wenn eine Geschwindigkeit einer Rücknahme eines Gaspedals (12) einen kritischen Wert überschreitet.

3. Verfahren nach Anspruch 2, **dadurch gekennzeichnet, dass** die Einspritzmenge des Kraftstoffs als Reaktion auf die Gaspedalbewegung zunächst um einen Teilbetrag schnell reduziert und anschließend verlangsamt abgesenkt wird.

4. Verfahren nach einem der Ansprüche 1 bis 3, **dadurch gekennzeichnet, dass** das Fahrzeug ein Getriebe aufweist, das mit Zugkraftunterbrechung schaltet, und daß die vorgesehenen Maßnahmen nur durchgeführt werden, wenn die Geschwindigkeit der Rücknahme des Gaspedals während einer Zugkraftunterbrechung und/oder einer vorgegebenen Fahrzeugverzögerung einen überkritischen Wert überschreitet.

## Claims

1. Method for the operation of a supercharged internal combustion engine for a motor vehicle, with a radial compressor driven by an exhaust gas turbine with an adjustable distributor, the flow cross-sections of which are reduced with reducing exhaust flow rate, **characterised in that** the flow cross-sections of the distributor (9) are temporarily opened more widely if the speed with which the accelerator (12) is released exceeds a critical value.

2. Method according to claim 1, **characterised in that** the reduction of the fuel injection quantity in response to the movement of the accelerator (12) is delayed if the speed with which the accelerator (12) is released exceeds a critical value.

3. Method according to claim 2, **characterised in that** the fuel injection quantity is initially reduced quickly by a part amount in response to accelerator movement, followed by a slower reduction.

4. Method according to any of claims 1 to 3, **characterised in that** the vehicle is provided with a transmission with tractive power interruption during gear changes, and **in that** the measures provided become effective only if the speed of accelerator release during a tractive power interruption and/or a preset deceleration of the vehicle exceeds a supercritical value.

## Revendications

1. Procédé d'exploitation d'un moteur à combustion interne suralimenté pour un véhicule automobile équipé d'un compresseur centrifuge qui est entraîné par une turbine à gaz d'échappement dotée d'un distributeur réglable dont les sections d'écoulement sont réduites lorsque le débit volumique de gaz d'échappement diminue, **caractérisé en ce que** les sections d'écoulement du distributeur (9) sont temporairement ouvertes de manière accrue lorsque la vitesse de retrait d'une pédale d'accélérateur (12) dépasse une valeur critique.

2. Procédé selon la revendication 1, **caractérisé en ce que** la quantité injectée de carburant est, en réaction au mouvement de la pédale d'accélérateur (12), réduite de façon retardée lorsque la vitesse de retrait d'une pédale d'accélérateur (12) dépasse une valeur critique.

3. Procédé selon la revendication 2, **caractérisé en ce que** la quantité injectée de carburant est, en réaction au mouvement de la pédale d'accélérateur, d'abord réduite rapidement d'un montant partiel, puis abaissée d'une manière ralentie.

4. Procédé selon l'une des revendications 1 à 3, **caractérisé en ce que** le véhicule présente une transmission dont les rapports sont passés avec interruption de la force de traction, et **en ce que** les mesures prévues ne sont mises en oeuvre que si la vitesse de retrait de la pédale dépasse une valeur surcritique pendant une interruption de la force de traction et/ou une décélération prédéfinie du véhicule.
